# EUROPEAN PATENT APPLICATION

(11) **EP 4 847 216 A1**
(43) Date of publication of application: **02.12.2026**
(21) Application number: 26177705.6
(22) Date of filing: 08.05.2026
(51) Int. Cl.: B26D 7/08, B26F 1/24, C04B 35/80, C04B 35/565, C04B 35/571

(54) **ULTRASONIC TOOLING ASSEMBLY HAVING NEEDLE ARRAY AND METHOD**

(30) Priority: 08.05.2025 US 202519203068
(71) Applicant: RTX Corporation, Farmington, CT 06032 (US)
(72) Inventor: WANG, Zhigang, South Windsor, 06074 (US); LANDRY, Timothy T., Ashford, 06278 (US); RIEHL, John D., Lebanon, 06249 (US); PARIKH, Nil, Newington, 06111 (US); BARRON, Alan C., Jupiter, 33458 (US)
(74) Representative: Dehns

(57) **Abstract**

An ultrasonic vibration tool (100) is used to machine a workpiece (160), such as a ceramic matrix composite (CMC) preform. The ultrasonic vibration tool includes a transducer (102), a booster (104), and a tool tip (106). The tool tip includes a tool tip edge (108) that engages the workpiece using mechanical vibrations generated by the transducer. The tool tip edge includes a surface facing the workpiece. A plurality of pins of a pin array (110) extend from the surface of the tool tip edge to machine the workpiece during the mechanical vibrations. The plurality of pins may be comprised of graphite that extend from the surface to be permanently inserted into the surface of the workpiece.

## Description

### FIELD OF THE INVENTION

The subject matter disclosed herein relates to channel formation using an ultrasonic tool. In particular, the subject matter relates to a needle array used on a tip of the ultrasonic tool for the channel formation.

### BACKGROUND OF THE INVENTION

Ceramic matrix composites (CMCs) may be formed of silicon carbide (SiC) fibers in a SiC matrix. The hardness of SiC/SiC CMCs is second only to that of diamond tooling. Additionally, the SiC fiber reinforced phase creates anisotropy and heterogeneity material properties. Therefore, it has been a challenge to develop an efficient and cost-effective way to perform high quality machining on such CMCs.

By incorporating Z-channels into a CMC preform, the permeability and uniformity for the infiltration in the chemical vapor infiltration (CVI) process is enhanced. Further, by optimizing Z-channel shapes and layouts, the processing time may be reduced and the overall mechanical properties of CMCs may be improved. Some examples of processes used for Z-channel formation in CMCs include waterjet-guided lasers.

### SUMMARY OF THE INVENTION

The present invention is directed, in a first aspect, to an ultrasonic machining system. The ultrasonic machining system includes an ultrasonic vibration tool having a tool tip. The tool tip includes a tool tip edge having a pin array extending from a surface of the tool tip edge. The ultrasonic machining system also includes a drive system to position a workpiece under the tool tip. The ultrasonic machining system also includes an ultrasonic power supply to provide power to the ultrasonic vibration tool.

In a further embodiment of the previous embodiment, the tool tip edge and the pin array are comprised of a titanium alloy.

In a further embodiment of any of the previous embodiments, a plurality of pins of the pin array includes a ceramic coating.

In a further embodiment of any of the previous embodiments, a plurality of pins of the pin array is composed of graphite.

In a further embodiment of any of the previous embodiments, the tool tip further includes a guide device fitted to the tool tip edge. The guide device may position the pin array to engage the workpiece. The guide device may include a plurality of holes to position the pin array.

In a further embodiment of any of the previous embodiments, the tool tip edge has a rectangular shape. In alternative embodiments, the tool tip edge has a circular shape. The ultrasonic vibration tool may be configured to rotate the tool tip edge having the pin array about an axis.

In another aspect, the present invention is directed to an ultrasonic vibration tool. The tool includes a transducer configured to convert electrical energy into mechanical vibrations. The tool also includes a booster coupled to the transducer to amplify the mechanical vibrations. The tool also includes a tool tip having a tool tip edge coupled to the booster to move along a longitudinal axis of the tool according to the mechanical vibrations. The tool tip edge includes a pin array of a plurality of pins extending from a surface of the tool tip edge.

In a further embodiment of any of the previous embodiments, the tool tip edge and the pin array are comprised of a titanium alloy.

In a further embodiment of any of the previous embodiments, the plurality of pins of the pin array includes a ceramic coating.

In a further embodiment of any of the previous embodiments, a plurality of pins is composed of graphite.

In a further embodiment of any of the previous embodiments, the tool also includes a guide device fitted to the tool tip edge. The guide device may position the plurality of pins of the pin array to extend in a direction away from the surface of the tool tip edge. The guide device may include a plurality of holes to position the plurality of pins of the pin array.

In a further embodiment of any of the previous embodiments, the tool tip edge has a rectangular shape.

In a further embodiment of any of the previous embodiments, the tool tip edge has a circular shape. The ultrasonic vibration tool may be configured to rotate the tool tip edge having the pin array about the longitudinal axis.

In yet another aspect, the present invention is directed to a method for using an ultrasonic vibration tool to machine a workpiece. The method includes converting power received at a transducer of the ultrasonic vibration tool into mechanical vibrations. The method also includes moving a tool tip of the ultrasonic vibration tool according to the mechanical vibrations. The tool tip includes a tool tip edge having a plurality of pins in a pin array configured to extend from a surface of the tool tip edge. The method also includes engaging the workpiece with the plurality of pins of the pin array of the tool tip edge in a first direction during the mechanical vibrations.

In a further embodiment of any of the previous embodiments, the method also includes withdrawing the plurality of pins of the pin array in a second direction opposite the first direction during the mechanical vibrations.

In a further embodiment of any of the previous embodiments, the method also includes inserting the plurality of pins into the workpiece, wherein the plurality of pins is comprised of graphite.

In a further embodiment of any of the previous embodiments, the method also includes withdrawing the ultrasonic vibration tool in a second direction opposite the first direction during the mechanical vibrations while leaving the plurality of pins inserted in the workpiece.

In a further embodiment of any of the previous embodiments, the method also includes rotating the tool tip edge along with the mechanical vibrations.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
Figure 1 illustrates a schematic view of an ultrasonic vibration tool according to the disclosed embodiments.
Figure 2A illustrates a schematic view of ultrasonic pin array penetration into a CMC preform according to the disclosed embodiments.
Figure 2B illustrates a close up schematic view of the ultrasonic pin array penetration into the CMC preform processing according to the disclosed embodiments.
Figure 3 illustrates a perspective view of a tool tip for the ultrasonic vibration tool according to the disclosed embodiments.
Figure 4 illustrates a perspective view of a pin array of the tool tip edge having pins according to the disclosed embodiments.
Figure 5 illustrates a tool tip edge having a guide device for pins of the pin array according to the disclosed embodiments.
Figure 6 illustrates a cross-sectional view of a tool tip edge engaged with the guide device and a pin array according to the disclosed embodiments.
Figure 7 illustrates a cross-sectional view of the guide device and the pin array according to the disclosed embodiments.
Figure 8 illustrates a two-dimensional tool tip for use with the ultrasonic vibration tool according to the disclosed embodiments.
Figure 9 illustrates a block diagram of an ultrasonic machining system using the ultrasonic vibration tool according to the disclosed embodiments.
Figure 10 illustrates a block diagram of a one embodiment of a control unit within the ultrasonic tooling system according to the disclosed embodiments.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art.

The following discussion omits or only briefly describes conventional features of the disclosed technology that are apparent to those skilled in the art. Reference to a particular embodiment does not limit the scope of the claims attached hereto. Additionally, any examples set forth in this specification are intended to be non-limiting and merely set forth some of the many possible embodiments for the appended claims. Further, particular features described herein can be used in combination with other described features in each of the various possible combinations and permutations. A person of ordinary skill in the art would know how to use the instant invention, in combination with routine experiments, to achieve other outcomes not specifically disclosed in the examples or the embodiments.

Unless otherwise specifically defined herein, all terms are to be given their broadest possible interpretation including meanings implied from the specification as well as meanings understood by those skilled in the art and/or as defined in dictionaries, treatises, etc. Unless defined otherwise, all technical and scientific terms used herein have the same meaning as commonly understood by one of ordinary skill in the art in the field of the disclosed technology. It must also be noted that, as used in the specification and the appended claims, the singular forms "a," "an," and "the" include plural referents unless otherwise specified, and that the terms "includes" and/or "including," when used in this specification, specify the presence of stated features, elements, and/or components, but do not preclude the presence or addition of one or more other features, steps, operations, elements, components, and/or groups thereof. Additionally, methods, equipment, and materials similar or equivalent to those described herein can also be used in the practice or testing of the disclosed technology.

The devices of the present disclosure may be understood more readily by reference to the following detailed description of the embodiments taken in connection with the accompanying drawing figures, which form a part of this disclosure. It is to be understood that this application is not limited to the specific devices, methods, conditions or parameters described and/or shown herein, and that the terminology used herein is for the purpose of describing particular embodiments by way of example only and is not intended to be limiting. All spatial references, such as, for example, proximal, distal, horizontal, vertical, top, upper, lower, bottom, left and right, are for illustrative purposes only and can be varied within the scope of the disclosure. For example, the references "upper" and "lower" are relative and used only in the context to the other, and are not necessarily "superior" and "inferior."

It will further be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

Various examples of the disclosed technology are provided throughout this disclosure. The use of these examples is illustrative only, and in no way limits the scope and meaning of the invention or of any exemplified form. Likewise, the invention is not limited to any particular preferred embodiment(s) described herein. Indeed, modifications and variations of the invention may be apparent to those skilled in the art upon reading this specification, and can be made without departing from its spirit and scope. The invention is therefore to be limited only by the terms of the claims, along with the full scope of equivalents to which the claims are entitled.

The present disclosure is directed to the use of ultrasonic pin arrays for drilling Z-channels to decrease cycle time and reduce costs. The use of ultrasonic energy to penetrate into the CMC preform via an array of pins leverages mechanical vibrations of ultrasonic waves to enhance the penetration to form the Z-channels. Different configurations of the pin array may be implemented, such as a monolithic pin array or a loose coupled pin array in a guide device. Depending on the targeted array, the guide device may be configured differently to accommodate the spacing and geometries of the holes.

The pin array may be composed of horn material that may provide improved ultrasonic performance. This horn material may be Ti6Al4V, which may provide an extended use life. To avoid any contamination of metals into the CMC preform, Ti6Al4V pins may be coated with a ceramic or polymer film to achieve improved ultrasonic energy conversion and keep the CMC preform contamination-free. In other embodiments, the pins of the pin array may be composed of graphite. Graphite pins may be incorporated to improve subsequent CVD or CVI process efficiency and effectiveness.

The guide device and pins may be reconfigurable and replaceable. The disclosed embodiments fit to variable features and hole layouts with high throughput using an array of multiple pin configurations. The ultrasonic vibrations reduce the required forces for machining the CMC preform, thereby allowing the pins to penetrate into the CMC preform with penetration efficiency. The disclosed embodiments also may reduce tool wear without cracking and delamination during penetration. The use of titanium pins with ceramic and polymer coatings may avoid possible contamination of the CMC preform. In the case of graphite pins, the guide device and the graphite pins also may be reconfigurable and replaceable.

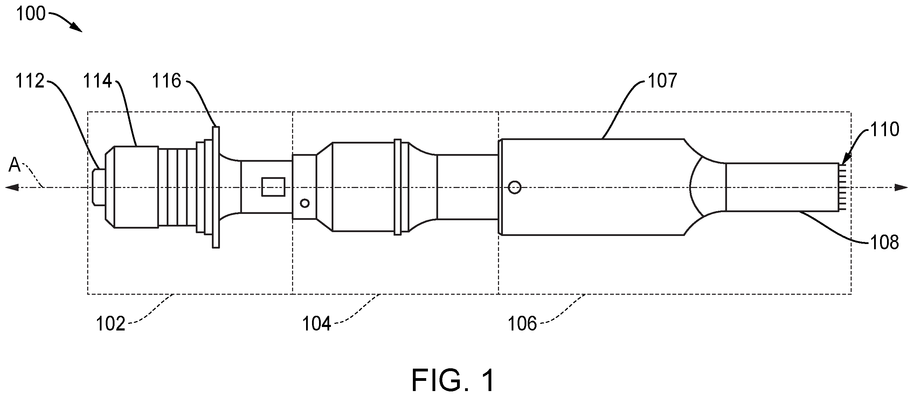

Figure 1 depicts a schematic view of an ultrasonic vibration tool 100 according to the disclosed embodiments. Ultrasonic vibration tool 100 includes a transducer 102, a booster 104, an ultrasonic tool tip 106 having an ultrasonic horn 107, and a tool tip edge 108. Tool tip edge 108 includes pin array 110. The electrical energy input to transducer 102 is converted to mechanical vibrations at a high frequency (usually 20-40 kHz) along longitudinal axis A of tool 100. The excited vibration is subsequently transmitted through booster 104 to tool tip 106 in order to amplify the vibration amplitude that is delivered to tool tip edge 108 using horn 107. Tool 100 may be located above the workpiece (not shown in Figure 1) and vibrates along longitudinal axis A at a desired amplitude.

Ultrasonic vibration tool 100 is used to machine a CMC component, such as a CMC preform, in order to form holes, channels, slots, and the like. Tool 100 may be attached to a work fixture (not shown) using a suitable fastener 112. Tool 100 also may include a back portion 114 and flange 116 that enhance delivery of the mechanical vibrations to tool tip 108. These features may be arranged in various configurations to achieve the functionality disclosed above.

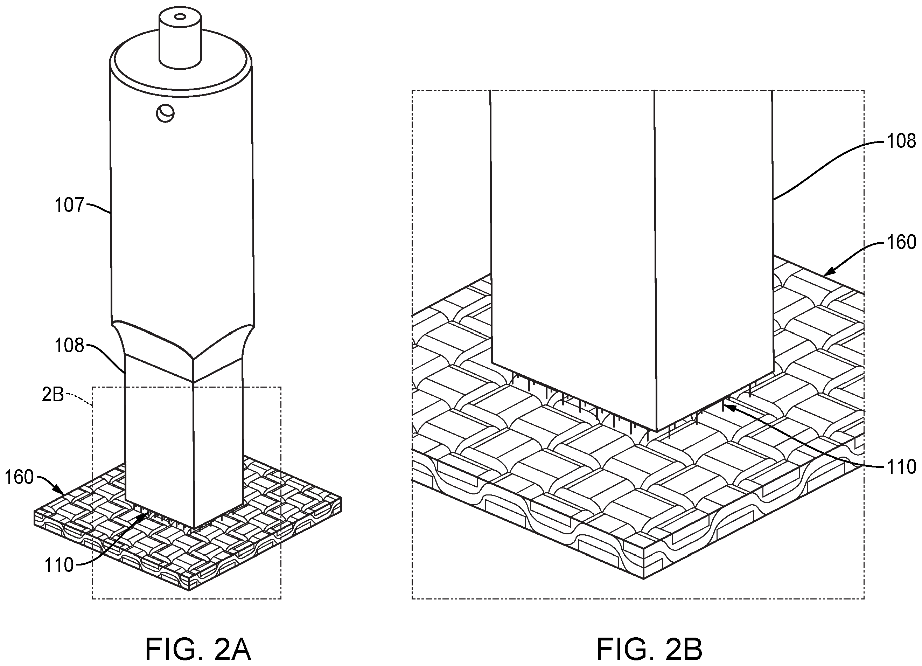

Figures 2A and 2B depict a schematic view of Z-channel formation process setup according to the disclosed embodiments. The disclosed embodiments use ultrasonic energy to penetrate into workpiece 160. Workpiece 160 may be a CMC preform. Pin array 110 penetrates workpiece 160. This approach leverages mechanical vibrations of ultrasonic waves to enhance penetration into workpiece 160 to form Z-channels. The disclosed embodiments may implement a monolithic pin array. Typical monolithic tools are made of titanium alloys due to desired properties such as density, toughness, and fatigue strength. Alternatively, the disclosed embodiments may implement a "loose coupled" pin array in a guide device, disclosed in greater detail below.

Referring to Figure 2B, pin array 110 penetrates the CMC preform of workpiece 160. Tool 100 may move along axis A into workpiece 160. Pin array 110 uses a number of pins to penetrate workpiece 160. For desired ultrasonic performance, Ti6Al4V may be used as the horn material to obtain the longest life. To avoid any contamination of metals in the CMC of workpiece 160, the pins of pin array may be coated with a ceramic or polymer film to achieve desired ultrasonic energy conversion and efficient contamination free penetration. In some embodiments, ceramic needles may be considered for pin array 110. In other embodiments, graphite needles may be considered for pin array 110.

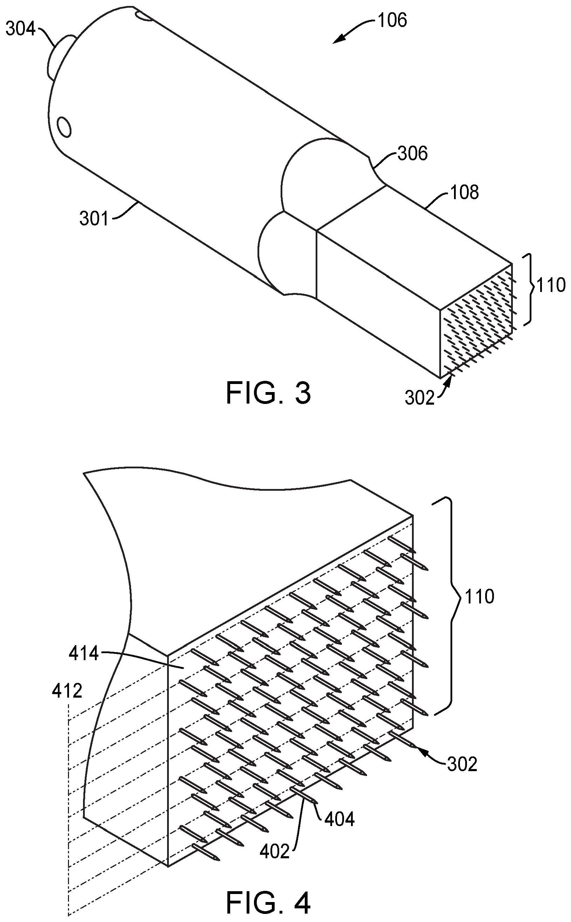

Figure 3 depicts a perspective view of a tool tip 106 according to the disclosed embodiments. Tool tip 106 includes upper portion 301 and tool tip edge 108. Upper portion 301 may include connector 304 that attaches tool tip 106 to booster 104. In some embodiments, upper portion 301 may be circular and having a tapered portion 306 that fits to tool tip edge 108.

Tool tip edge 108 includes pin array 110. Pin array 110 includes pins 302. Tool tip edge 108 may have a rectangular shape to fit a number of pins 302 in pin array 110. The configuration of tool tip 106 enables an efficient energy transfer to pins 302 to penetrate into workpiece 160. In some embodiments, tool tip 106 or tool tip edge 108 may be a monolithic design. In other embodiments, tool tip edge 108 may be a separate piece from upper portion 301.

Figure 4 depicts a perspective view of pin array 110 having pins 302 according to the disclosed embodiments. Pin array 110 includes a number of pins 302 that extend from surface 414. Surface 414 may face workpiece 160 such that pins 302 extend to engage the workpiece during operations. Pins 302 may be arranged in rows 412. Pins 302 may be staggered such that pins in one row may not aligned with pins in an adjacent row. This configuration may increase the surface area engaged by pin array 110. Pins 302 include a shaft 402 and tip 404. Tip 404 may be pointed, or have a needle shape.

Pin array 110 may provide a high level of precision and control during the penetration process by tool 100. Ultrasonic hammering improves penetration by pins 302 into the CMC preform. It also may reduce the load on pins 302 by up to 90% in comparison to a static press process. These features may help to avoid pin bending and breakage, as well as reduced tool wear.

Pins 302 may be comprised of a titanium alloy material, such as Ti6Al4V. Pins 302 may be ceramic coated, such as with a ceramic or polymer film. This feature may extend the tool life of tool tip 106. It also may prevent contamination of the CMC preform by metals in pins 302. Pins 302 also may be comprised of graphite. The number of pins 302 may vary depending on the type of machining and dimensions of surface 414. Use of pins 302 with the ultrasonic vibrations provided by tool 100 may help reduce the risk of fiber breakage, the creation of large cracks, or delamination during penetration.

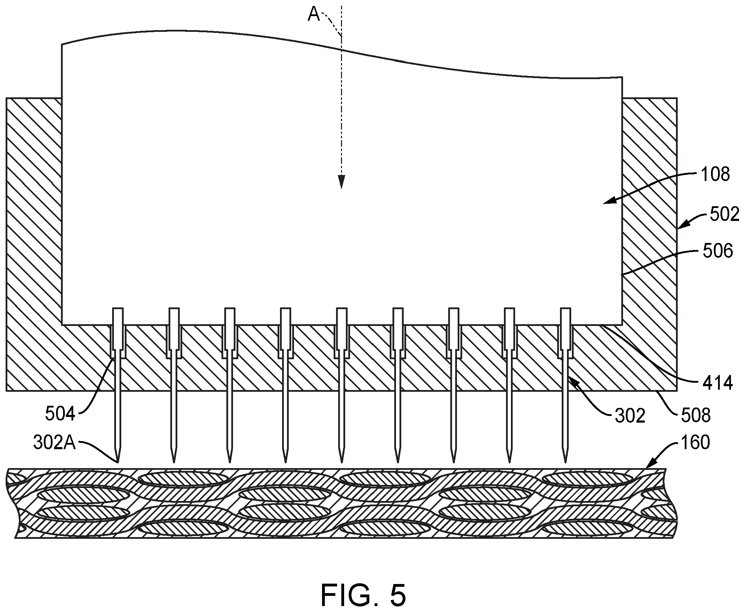

Figure 5 depicts a tool tip edge 108 having a guide device 502 for pins 302 of pin array 110 according to the disclosed embodiments. In some embodiments, pins 302 may be coupled at the end of the horn, or tool tip edge 108, by a guide device 502. Guide device 502 is disclosed in greater detail below. Guide device 502 may be shaped to fit tool tip edge 108.

Guide device 502 may include a cavity 506 to receive a portion of tool tip edge 108. Guide device 502 may be fitted to tool tip edge 108 so that the guide device and pins 302 are secured to the end of tool 100. Guide device 502 includes passages, or holes, 504 that receive pins 302 in order to engage workpiece 160. In some embodiments, pins 302 may extend from surface 414, as disclosed above. Depending on the targeted area, guide device 502 may be configured differently to accommodate the spacing and geometries of the holes. Pin arrays 110 may configured differently such that different guide devices may be used.

In other embodiments, pins 302 may be loosely coupled or placed, as shown by pin 302A. In these embodiments, tool tip edge 108 and pins 302 may not be formed as a monolithic structure. Instead, these components may be formed separately. Guide device 502 and pins 302 are fitted to tool tip edge 108 as separate components, which allows the guide device and the pins to be replaceable and reconfigurable. Different types of guide devices and pins may be used by tool 100. These features also allow for variation in the machining of workpiece 160 and hole layout. Pins 302 extend through holes 504 and from surface 508 of guide device 502. Further, different types of guide devices and pins may be used by tool 100 to accommodate the insertion and release of graphite pins. In these embodiments, pins 302 are permanently inserted into the surface of the workpiece. The tool withdraws in a direction along axis A away from workpiece 160 and leaves pins 302 inserted in the workpiece.

For example, if one or more pins 302 breaks or is worn down, the pins may be replaced without the need to replace tool tip edge 108 or pin array 110. Guide device 502 also protects pins 302 during use from breakage. Guide device 502 guides pins 302 to machine workpiece 160 and takes the pins out of the workpiece after pin penetration. Use of the guide device alleviates the stress on tool 100 and pins 302 during ultrasonic tooling.

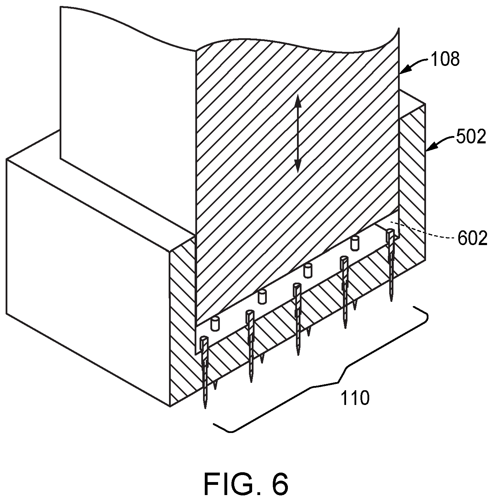

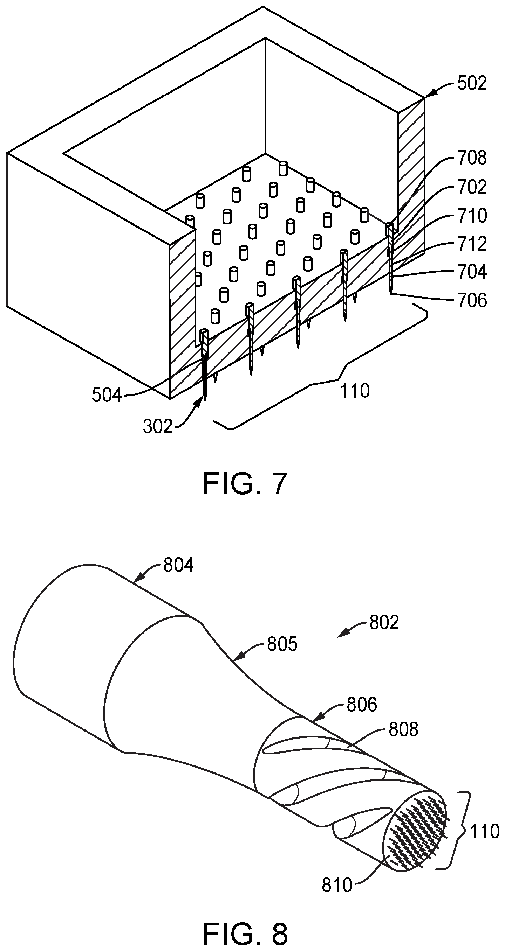

Figure 6 depicts a cross-sectional view of tool tip edge 108 engaged with guide device 502 and pin array 110 according to the disclosed embodiments. Figure 7 depicts a cross-sectional view of guide device 502 and pin array 110 according to the disclosed embodiments. Guide device 502 includes a plurality of holes 504 to fit pins 302 of pin array 110. Tool tip edge 108 impacts pins 302 held by guide device 502 to engage workpiece 160. In some embodiments, a space 602 may be formed between surface 414 of tool tip edge 108 and tops 708 of pins 302. Further, pins 302 may move within holes 504 in some embodiments.

For example, a diameter of a pin 302 may be 0.1 to 1 millimeter (mm) with a taper. Pin 302 may include upper portion 702, tapered portion 704, and point 706. Upper portion 702 may have a wider diameter than tapered portion 704. In some embodiments, the pin diameter may be larger than the nominal size of hole 504 to compensate for the spring-back after pin penetration. Holes 504 also may be configured with a wide portion 710 and narrow portion 712. Wide portion 710 may fit to upper portion 702 of pin 302 while narrow portion 712 fits to narrow portion 712. This configuration may allow tool 100 to pull pins 302 back from workpiece 160 after penetration. It also may prevent breakage or bending of the pins during use.

As disclosed above, different guide devices 502 may be provided for different types, numbers, and the like for pin array 110. Tool 100 can remove and switch guide device 502 as needed. Guide device 502 provides support to pins 302 and increases pin stiffness to avoid breakage and bending.

Figure 8 depicts a two-dimensional tool tip 802 for use with tool 100 according to the disclosed embodiments. Tool 100 may be modified to rotate tool tip 802 as well as move the tool tip along axis A to engage workpiece 160. Tool tip 802 may provide longitudinal and torsional vibration to help pin array 110 slide into workpiece 160.

Tool tip 802 includes upper portion 804 and tapered portion 805. Tool tip edge 806 is connected to tapered portion 805. In these embodiments, tool tip 802 may be cylindrical as opposed to rectangular. Tool tip 802 may rotate about longitudinal axis A. Pin array 302 rotates when engaging workpiece 160.

Tool tip edge 806 includes slits 808 formed therein. Slits 808 may alleviate stress on tool tip edge 806 during operations. Tool tip edge 806 also includes surface 810. Surface 810 may be circular. Pin array 110 may extend from surface 810. Tool tip 802 is shown without a guide device but, in some embodiments, a guide device may be used to house pin array 110. Tool tip edge 806 may rotate in a clockwise or counter-clockwise direction.

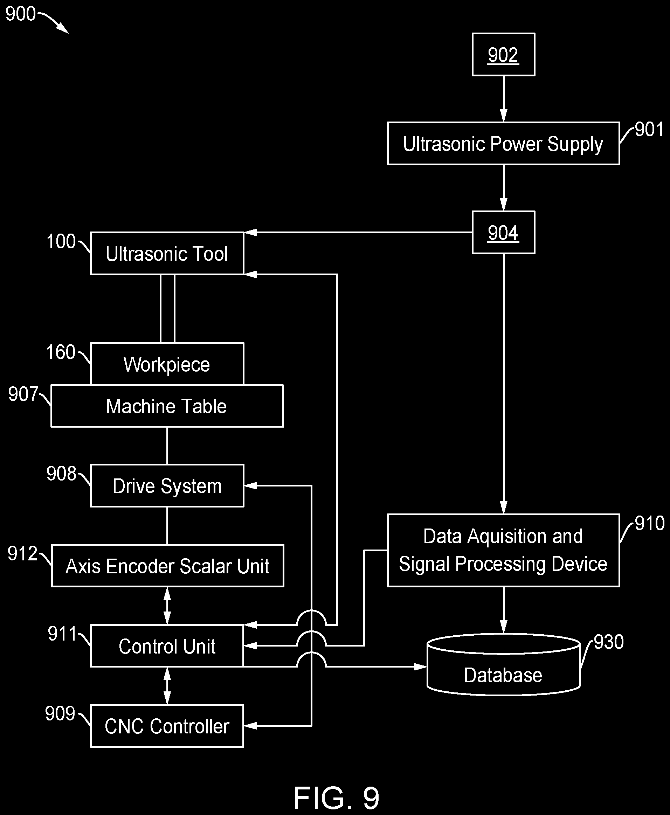

Figure 9 depicts a block diagram of an ultrasonic machining system 900 using ultrasonic vibration tool 100 according to the disclosed embodiments. System 900 includes an ultrasonic power supply 901, which receives incoming electrical power at power terminal 902. Power supply 901 supplies electrical power to ultrasonic vibration tool 100 via power terminal 904. Tool 100 includes tool tip 106, which is used to perform a machining operation on workpiece 160. Workpiece 160 is mounted on machine table 907, which in turn is driven in x-y-z directions by drive system 908 under the control of CNC controller 909. Ultrasonic power supply 901 may also supply electrical power to drive system 908 and CNC controller 909, or theses elements can be powered from other sources.

When tool 100 is fixed in a stationary position, drive system 908 can position workpiece 160 under tool tip 106 as needed in order to carry out the machining operation under the control of CNC controller 909. Alternatively, workpiece 160 can remain stationary and tool 100 can be carried by its own drive system similar to drive system 908 also under control of a CNC controller, similar to CNC controller 909.

After appropriate filtering to remove unwanted artifacts, if necessary, a data signal from data acquisition and signal processing device 910 is suppled to control unit 911. Control unit 911 also may control the operation of CNC controller 909. The data signal is used by control unit 911 to control the operation of CNC controller 909 to, in turn, control the feed rates of drive system 908 to maintain desired loads on tool 100. Speed and position data from axis encoder scalar unit 912 also may be supplied in real time to control unit 911. Based on all of this data, control unit 911 can determine the motion and rate of motion along the machining axis of tool 100 required in order to achieve the desired and most efficient machining process. Control unit 911 can also control the operation of tool 100, e.g., turning the tool on and off, controlling various operating parameters, and turning the slurry source on and off.

Database 930 is included in system 900. During the disclosed processes, all process data, including machining conditions, reference and actual load as well as amplitude profiles may be stored in database 930. The data may be saved for analysis. If the targeted process performance is achieved to meet the quality inspection requirements of parts subject to ultrasonic machining by tool 100, then the reference process signature and the measured signature may be fused as an adjusted baseline signature. The adjusted baseline signature may be saved to database 930. In machining subsequent CMC parts, the adjusted baseline signature may be used for process monitoring and control by following the same processes used to machine the previous workpieces.

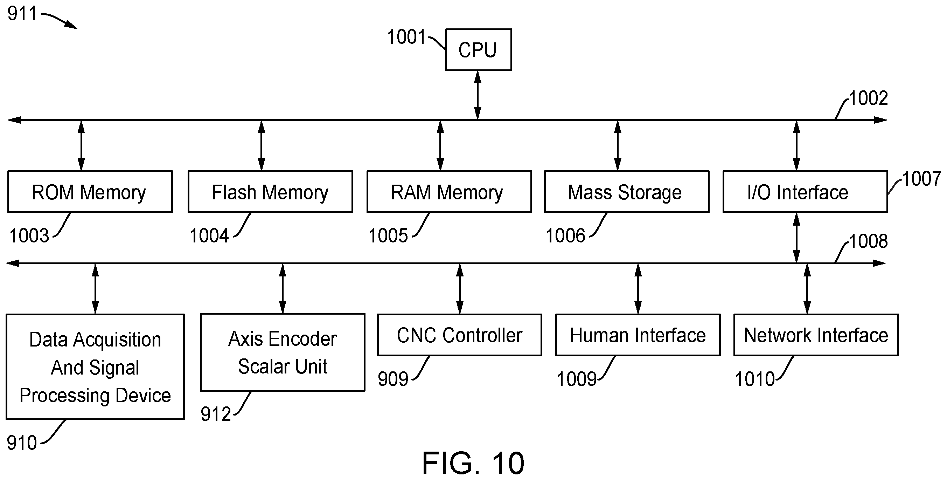

Figure 10 depicts a block diagram of a one embodiment of control unit 911 according to the disclosed embodiments. Control unit 811 includes central processing unit (CPU) 1001, which is used to execute computer software instructions. CPU 1001 is coupled, via bus 1002, to ROM memory 1003, flash memory 1004, RAM memory 1005, mass storage 1006 and I/O interface 1007.

ROM memory 1003 and flash memory 1004 may be used to store computer software instructions for execution by CPU 1001. RAM memory 1005 may also be used for storing computer software instructions, and especially for storing information that is only needed for a short period of time. Mass storage 1006 is used for longer and larger data storage needs as may be required to be retain for data analysis over time.

I/O interface 1007 allows the control unit to communicate via bus 1008 to other parts of the system, such as data acquisition and signal processing device 910, axis encoder scalar unit 912, and CNC controller 909, all shown in Figure 9. Also coupled to control unit 911 may be human interface device 1009, which allows an operator of the system to input control commands to the system via switches, knobs, keyboards and the like and to receiver information from the system via lights, displays, audio devices and the like.

A network interface 1010 may also be provided that allows control unit 911 to communicate with Internet hosted services such as Cloud Storage Units web applications and the like that consume data provided via control unit 911 for analysis and subsequent retrieval. The functionality disclosed herein also may be integrated into CNC controller 909.

In accordance with the disclosed embodiments, Z-channel formation into CMC preforms may be performed with ultrasonic pin penetration. The ultrasonic tool may implement a guide device and pins, which are reconfigurable and replaceable. This configuration may fit to variable features and hole layout with a high throughput using an array of multiple pin configurations. The ultrasonic vibrations may reduce the required forces, thereby making it easier for the pins to penetrate into the CMC preform with improved penetration efficiency and reduced tool wear without cracking and delamination during penetration. The titanium pins with ceramic and polymer coatings avoid any contamination of metals into the CMC preform.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. An ultrasonic machining system comprising:
an ultrasonic vibration tool (100) having a tool tip (106), wherein the tool tip comprises a tool tip edge (108) having a pin array (110) extending from a surface of the tool tip edge;
a drive system (908) to position a workpiece (160) under the tool tip; and
an ultrasonic power supply (901) to provide power to the ultrasonic vibration tool.

2. The ultrasonic machining system of claim 1, wherein the tool tip edge and the pin array are comprised of a titanium alloy.

3. The ultrasonic machining system of claim 1 or 2, wherein a plurality of pins of the pin array includes a ceramic coating.

4. The ultrasonic machining system of claim 1, 2 or 3, wherein a plurality of pins of the pin array is comprised of graphite.

5. The ultrasonic machining system of any preceding claim, wherein the tool tip further comprises a guide device (502) fitted to the tool tip edge.

6. The ultrasonic machining system of claim 5, wherein the guide device positions the pin array to engage the workpiece.

7. An ultrasonic vibration tool (100) comprising:
a transducer (102) configured to convert electrical energy into mechanical vibrations;
a booster (104) coupled to the transducer to amplify the mechanical vibrations;
a tool tip (106) having a tool tip edge (108) coupled to the booster to move along a longitudinal axis of the tool according to the mechanical vibrations, wherein the tool tip edge includes a pin array (110) of a plurality of pins extending from a surface of the tool tip edge.

8. The ultrasonic vibration tool of claim 7, wherein:
the tool tip edge and the pin array are comprised of a titanium alloy; and/or
the plurality of pins of the pin array includes a ceramic coating; and/or
the plurality of pins of the pin array is comprised of graphite.

9. The ultrasonic vibration tool of claim 7 or 8, further comprising a guide device (502) fitted to the tool tip edge.

10. The ultrasonic machining system or ultrasonic vibration tool of any preceding claim, wherein the tool tip edge has a rectangular shape.

11. The ultrasonic machining system or ultrasonic vibration tool of any of claims 1 to 9, wherein the tool tip edge has a circular shape.

12. The ultrasonic machining system or ultrasonic vibration tool of claim 11, wherein the ultrasonic vibration tool is configured to rotate the tool tip edge having the pin array about the longitudinal axis.

13. A method for using an ultrasonic vibration tool (100) to machine a workpiece (160), the method comprising:
converting power received at a transducer (102) of the ultrasonic vibration tool into mechanical vibrations;
moving a tool tip (106) of the ultrasonic vibration tool according the mechanical vibrations, wherein the tool tip includes a tool tip edge (108) having a plurality of pins in a pin array (110) configured to extend from a surface of the tool tip edge; and
engaging the workpiece with the plurality of pins of the pin array of the tool tip edge in a first direction during the mechanical vibrations.

14. The method of claim 13, further comprising:
rotating the tool tip edge along with the mechanical vibrations; and/or
withdrawing the plurality of pins of the pin array in a second direction opposite the first direction during the mechanical vibrations.

15. The method of claim 13 or 14, further comprising:
inserting the plurality of pins into the workpiece, wherein the plurality of pins is comprised of graphite; and
withdrawing the ultrasonic vibration tool in a second direction opposite the first direction during the mechanical vibrations while leaving the plurality of pins inserted in the workpiece.
